Europäisches Patentamt

European Patent Office

Office européen des brevets

(19)

(11) Numéro de publication : **0 108 097**
**B1**

(12) # FASCICULE DE BREVET EUROPÉEN

(45) Date de publication du fascicule du brevet :
20.01.88

(21) Numéro de dépôt : 83901379.4

(22) Date de dépôt : 05.05.83

(86) Numéro de dépôt international :
PCT/FR 83/00087

(87) Numéro de publication internationale :
WO/8303956 (24.11.83 Gazette 83/27)

(51) Int. Cl.⁴ : **A 46 B 13/02**

(54) **BROSSE A DENTS ELECTRIQUE A BROSSES ROTATIVES.**

(30) Priorité : 06.05.82 FR 8207862

(43) Date de publication de la demande :
16.05.84 Bulletin 84/20

(45) Mention de la délivrance du brevet :
20.01.88 Bulletin 88/03

(84) Etats contractants désignés :
AT BE CH DE GB LI NL SE

(56) Documents cités :
EP-A- 0 046 521
FR-A- 486 055
FR-A- 651 108
FR-A- 1 137 754
FR-A- 1 420 912
US-A- 2 628 377
US-A- 2 655 674
US-A- 3 242 516
US-A- 3 800 350
US-A- 4 320 774

(73) Titulaire : **Dejoux, André Marcel**
**15, rue Lakanal**
**F-75015 Paris (FR)**

**Salsarulo, Angélo Georges**
**45 rue Jean Mermoz**
**F-78620 Etang-La-Ville (FR)**

(72) Inventeur : **Dejoux, André Marcel**
**15, rue Lakanal**
**F-75015 Paris (FR)**
Inventeur : **Salsarulo, Angélo Georges**
**45 rue Jean Mermoz**
**F-78620 Etang-La-Ville (FR)**

(74) Mandataire : **Dejoux, André**
**33, rue de Fontarabie**
**F-75020 Paris (FR)**

## Description

La présente invention concerne les brosses à dents électriques. On connaît déjà de nombreux types de brosses à dents électriques. Ces brosses reproduisent le mouvement alternatif de la main pour le brossage vertical. Ce mouvement a tendance à repousser les gencives alors qu'il faudrait plutôt faire l'inverse, c'est-à-dire partir de la gencive vers l'extrémité libre de la dent. Il a aussi été conçu quelques brosses à dents rotatives, mais qui ne sont pas pratiques, leur positionnement sur les dents n'étant pas assuré (EP-A-0046521 et US-A-2628377). Ces brosses ne sont pas sur le marché.

L'invention telle qu'elle est décrite dans les revendications a pour objet de pallier les divers inconvénients présentés par les brosses existantes au moyen de trois types de brosses rotatives réalisées chacune en module enfichable sur un bloc moteur.

Le premier module est constitué par trois brosses rotatives cylindriques dont une est en appui sur le dessus des dents et les deux autres disposées de chaque côté des dents de façon à pouvoir brosser simultanément les trois faces accessibles. Les brosses situées de chaque côté des dents tournent en sens inverse, le sens de brossage s'effectuant de la gencive vers l'extrémité libre des dents.

Le second module comporte deux brosses rotatives tronconiques verticales parallèles pour le brossage simultané de la partie accessible entre les dents.

Le troisième module comporte deux brosses rotatives coniques disposées horizontalement en opposition par leur sommets en regard pour le brossage des interstices entre les dents.

Les avantages présentés par la brosse selon l'invention sont les suivants :

- brossage simultané des 3 faces accessibles des dents en un seul passage ;

- positionnement correct direct des brosses par construction à cheval sur la rangée de dents à brosser lorsque la brosse supérieure se trouve en appui sur le dessus des dents ;

- le sens de rotation des deux brosses situées de chaque côté des dents est inversé pour brosser de la gencive vers l'extrémité des dents ;

- très grande rapidité et homogénéité du brossage sur les trois faces des dents ;

- brossage rotatif rapide entre les dents par les second et troisième modules lorsque les dents sont écartées naturellement ou du fait d'une maladie.

L'invention est décrite en détail dans le texte qui suit en référence aux dessins annexés dans lesquels :

- la fig. 1 montre un exemple de brosse à dents électrique selon l'invention en coupe longitudinale ;

- les fig. 2, 3, 4, et 5 sont des coupes suivant A, B, C, D, de la fig. 1 ;

- la fig. 4A montre une version simplifiée à deux brosses en opposition ;

- les fig. 6, 7 et 8 représentent un exemple du deuxième module de brossage comportant deux brosses rotatives tronconiques verticales ;

- les fig. 9, 10, 11, 12 montrent un exemple du troisième module de brossage à deux brosses coniques en opposition par leur sommet.

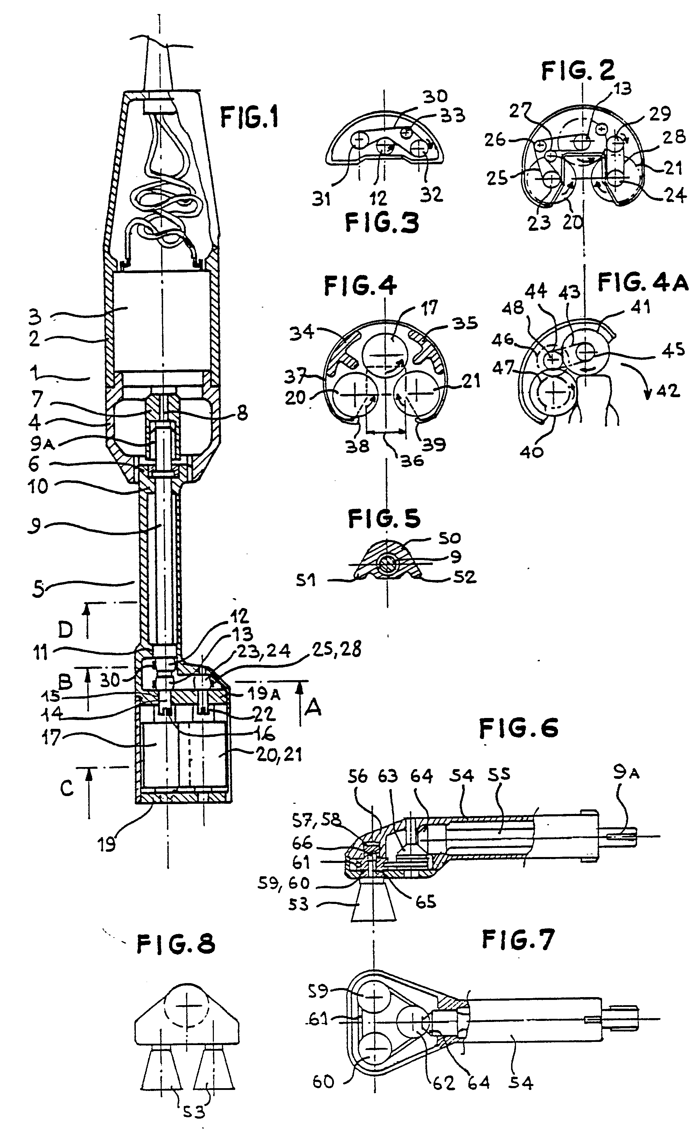

Telle qu'elle est représentée sur la fig. 1, la brosse à dent électrique selon l'invention comporte un bloc-moteur 1 constitué par un corps moulé 2 en matière plastique, un moteur électrique d'entraînement 3, un capot 4 sur lequel est centré et orienté le premier module à trois brosses cylindriques rotatives 5 par l'intermédiaire de son embout 6 et d'un entraîneur 7 solidaire de l'arbre du moteur 8 dans lequel est engagé l'arbre d'entraînement 9 du module 5 supporté par les paliers 10, 11 et comportant, à son autre extrémité, deux poulies plates 12, 13 l'une près de l'autre, une portée 14 tournant dans un palier 15 et un embout 16 d'entraînement de la brosse supérieure 17 dont l'autre extrémité de l'axe 18 est engagée élastiquement dans un trou palier de la paroi 19 qui peut être rendue amovible pour l'interchangeabilité des brosses. On voit également le montage des deux autres brosses 20, 21 en partie basse avec leur entraîneur 22 se terminant par une poulie 23, 24 coopérant avec la poulie 13.

La fig. 2 montre la disposition des poulies et courroies pour l'entraînement en rotation des brosses 20, 21 fig. 4. La brosse 20 est entraînée par une courroie 25 engagée sur les poulies 13 et 23 et sur les poulies de renvoi 26, 27. La brosse 21 est entraînée par une courroie 28 engagée sur les poulies 24 et 29. La poulie 29 est entraînée en rotation en sens inverse de la poulie de commande 13 par une courroie 30 engagée sur une poulie 12 calée sur le même axe que la poulie 13 fig. 3 et les poulies 31, 32, 33. La poulie 32 est calée sur le même axe que la poulie 29.

Sur la fig. 4 on a représenté la disposition des trois brosses 17, 20, 21, et la structure en coupe 34, 35 qui relie les deux parties 19, 19a fig. 1 et l'espace 36 de passage des dents à brosser. Le flasque 19 peut être rendu amovible pour faciliter le changement des brosses lorsqu'elles sont usées. On a prévu également un capot 37 ajouré pour protéger les parois internes de la bouche pendant la rotation des brosses, ce capot est clippé élastiquement à ses deux extrémités inférieures au moyen de bossages de clippage 38, 39, coopérant avec des rainures correspondantes des parois 19, 19a.

Dans une version simplifiée, on pourrait ne pas mettre la brosse 17 et effectuer le positionnement en hauteur des brosses par appui du dessus des dents sur une butée de guidage du corps.

La figure 4a montre une variante possible à deux brosses rotatives cylindriques 40, 41, entraînées en rotation en sens inverse l'une de l'autre. Cette variante ne permet pas le brossage des trois faces en un seul passage et le positionnement des brosses sur les dents n'est pas aisé car il faut faire pivoter les brosses au-dessus des dents dans le sens de la flèche 42 pour effectuer le brossage de la troisième face. Par contre, l'entraînement en rotation est plus simple que pour la version de la fig. 1, car il n'y a qu'une seule courroie 43 passant sur les poulies menante 44 et menée 45, et deux engrenages, l'un menant 46 et l'autre mené 47 engrénant ensemble. L'engrenage 46 est solidaire de l'arbre de commande 9, 48.

La fig. 5 montre une coupe suivant D du module à trois brosses cylindriques comportant l'arbre d'entraînement 9 et le corps 50 muni d'ailettes de rigidification 51, 52. On pourrait envisager le raccordement de ce premier module au niveau de la coupe B.

Les fig. 6, 7 et 8 montrent un second module à deux brosses tronconiques 53 interchangeable pour le brossage vertical entre les dents. Il comporte le corps de module 54, l'arbre d'entraînement 55 avec ses moyens de centrage et d'immobilisation sur le bloc moteur, identiques à ceux du premier module, un capot rapporté soudé ou collé 56 coopérant avec le corps 54 pour le guidage des axes 57, 58, des poulies 59, 60, d'entraînement en rotation des brosses coniques 53 au moyen de la courroie ronde 61 coopérant avec la poulie 62 solidaire d'un pignon conique 63 engrénant avec un second pignon conique 64 solidaire du bout d'arbre d'entraînement 55. Les brosses tronconiques 53 sont engagées par leur arbre 65 dans le logement 66 des poulies 59, 60.

On peut également, pour entraîner les brosses en rotation à partir de l'arbre 55, remplacer les engrenages 63, 64, par une poulie et une courroie ronde en utilisant des poulies complémentaires de renvoi pour passer du plan horizontal au plan vertical.

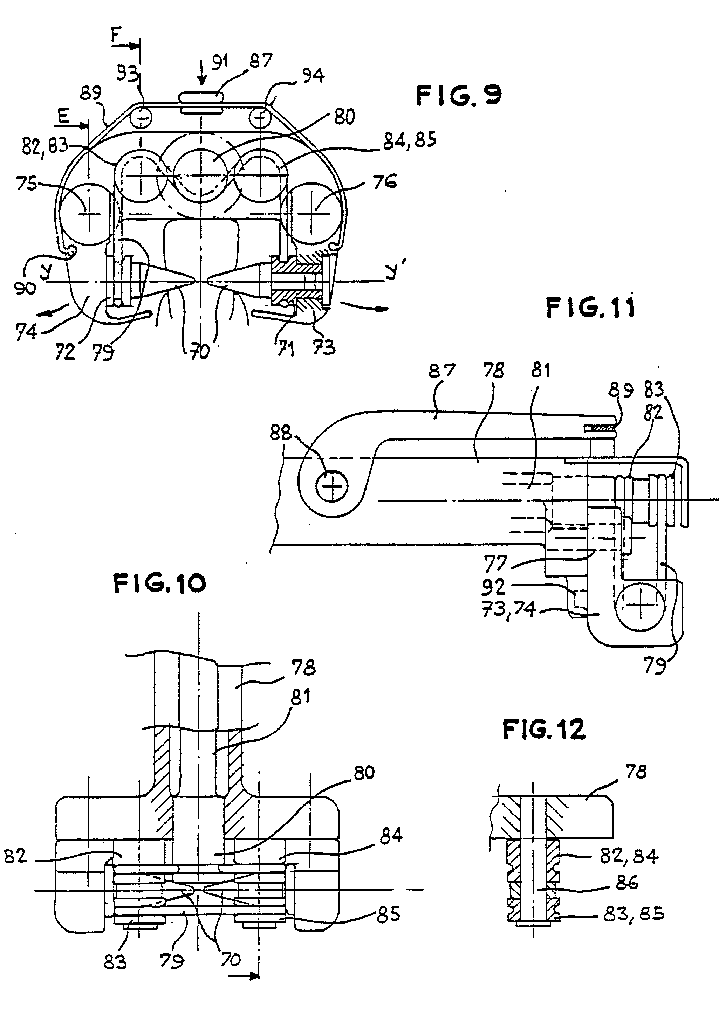

Les fig. 9, 10, 11, 12, montrent un troisième module à deux brosses côniques 70 interchangeables disposées horizontalement en opposition, sommets en regard. L'axe de ces deux brosses est engagé dans un logement approprié ménagé dans leur poulie respective d'entraînement en rotation 71, 72, tournant dans un alésage d'un levier support 73, 74 articulé en 75, 76 sur un axe 77 engagé dans un trou correspondant du corps 78 du troisième module. L'entraînement en rotation est réalisé au moyen d'une courroie ronde 79, des poulies 71, 72, de la poulie menante 80 solidaire de l'arbre d'entraînement 81 dont la partie d'accouplement, du côté du bloc-moteur, est identique à celle des deux autres modules, et des poulies de renvoi 82, 83 et 84, 85, montées sur un axe 86 solidaire du corps 78.

Pour la mise en place des brosses entre les dents, on les écarte en appuyant avec l'index sur un levier 87 (fig. 9, 11), articulé sur l'axe 88 à cheval sur le corps 78, l'extrémité libre du levier prend en fourchette une courroie 89 moulée en matière plastique armée inextensible dont les extrémités forment une tige 90 engagée dans un logement correspondant des leviers 73, 74 et en appui sur deux galets 93, 94. L'action sur le levier 87 dans le sens de la flèche 91 a pour effet d'écarter simultanément les deux leviers 73, 74, et donc d'écarter également les brosses 70 l'une de l'autre pour permettre de les engager dans les interstices entre les dents. La course des leviers 73, 74, est limitée par un bossage 92 entre les butées de fin de course du corps 78. Les leviers sont ramenés en position de repos les brosses 70 l'une près de l'autre, presque à se toucher, par un moyen de rappel à déformation élastique du type ressort à lame ou ressort spirale.

## Revendications

1. Brosse à dents électrique rotative comportant un bloc moteur et des moyens de transmission du mouvement de rotation aux arbres d'entraînement de brosses de plusieurs modules amovibles supportant les brosses et leur arbre de transmission parallèle ou perpendiculaire à l'arbre de sortie du moteur électrique, des moyens de protection des brosses, dans laquelle le module amovible pour le brossage normal des dents comporte trois brosses cylindriques interchangeables à axes flexibles parallèles, disposées de façon à enserrer et brosser simultanément la face externe, la face supérieure et la face intérieure de plusieurs dents, ledit module étant muni, à l'avant, d'une ouverture en U pour introduire les brosses à cheval sur les dents, caractérisée en ce que les trois brosses cylindriques interchangeables (17, 20, 21), du module de brossage normal des dents, sont courtes et de diamètre relativement important, les brosses (20, 21) étant très proches l'une de l'autre pour atteindre l'espace entre les dents, la partie inférieure de la brosse supérieure (17) dépassant très nettement du fond d'un dégagement en U de largeur (36) à bords évasés, ménagé sur la partie avant et sur la partie arrière du corps dudit module à chaque extrémité des brosses, d'une largeur supérieure à celle des dents les plus larges et d'une profondeur nettement au-dessus du sommet des dents, coopérant avec un dégagement (51, 52) du prolongement du corps (5) du module pour permettre l'enfourchement aisé de la mâchoire en position normale de brossage sans être gêné par les autres dents, notamment de l'avant de la mâchoire, et en ce que la partie avant (19) du corps dudit module servant de palier aux trois brosses (17, 20, 21) est rendue amovible par clippage sur la partie (15) dudit corps formant le palier arrière des brosses, et en ce que ladite partie (19) forme également un capot (37) enveloppant les brosses (17, 20, 21) jusqu'à proximité des gencives interne et externe, et en ce qu'un second module, prévu pour le brossage des espaces situés à la base des dents, comporte deux brosses tronconiques (70) en regard, équipées d'un moyen permettant de les écarter l'une de l'autre pour leur mise en place.

2. Brosse selon la revendication 1, caractérisée en ce que le moyen d'entraînement en rotation (55) des brosses tronconiques (53) du second module comporte un corps (54), un arbre de transmission (55) s'enfichant d'un côté sur le bloc moteur, muni de l'autre côté d'une poulie menante (64) et tournant dans des paliers du corps (54), et en ce que les deux brosses (53) sont munies d'une queue engagée à force dans le moyeu (67) des poulies menées (59, 60) entraînées en rotation par une courroie (61) engagée sur les poulies (59, 60, 62) et en ce que la poulie menante (62) reçoit son mouvement d'un couple de pignons coniques (63, 64) dont l'un (64) est solidaire de l'arbre de transmission (55) et l'autre solidaire de la poulie menante (62).

3. Brosse selon la revendication 1, dans laquelle le module amovible de brossage est caractérisé en ce qu'il comporte deux brosses coniques (70) interchangeables, dont les axes, en position de brossage, sont situés dans le prolongement l'un de l'autre et opposés par leur sommet en regard, et espacées d'au moins un millimètre, et en ce que chacune des brosses est montée sur un bras pivotant (73, 74) dans le plan des axes des brosses coopérant avec un moyen de commande manuelle d'écartement permettant leur engagement à la base des dents écartées.

4. Brosse selon la revendication 1, caractérisée en ce que le moyen d'entraînement en rotation des brosses coniques du troisième module comporte un arbre de transmission (81) enfiché d'un côté sur le bout d'arbre du bloc moteur et muni de l'autre côté d'une poulie menante (80) solidaire de l'arbre et coopérant avec une courroie (79) pour entraîner en rotation des poulies menées (71, 72) montées sur des leviers (73, 74) pivotant entre des butées sur un axe (75) solidaire du corps (78) du module et avec des poulies de renvoi (82, 83, 84, 85) montées de chaque côté de la poulie menante (80) sur un axe (86) solidaire du corps (78).

5. Brosse selon les revendications 1 et 2, caractérisée en ce que le moyen d'écartement des brosses (70) du troisième module est constitué par une courroie fixe (89) comportant à chacune de ses extrémités une tige (90) engagée dans un logement correspondant de chacun des leviers (73, 74) et en appui sur deux galets (93, 94), et en ce qu'un levier (87) articulé sur un axe (88) sur le corps (78) du module est rendu solidaire de la courroie par son extrémité libre, et en ce que les leviers (73, 74) portant les brosses sont rappelés en position par un moyen de rappel à déformation élastique.

## Claims

1. Electric rotary toothbrush containing a motor unit and means of imparting the rotation movement to the brush drive shafts of a number of removeable modules carrying the brushes and their drive shaft parallel or perpendicular to the outlet shaft of the electric motor, means of protecting the brushes, in which the removeable module designed for normal tooth brushing contains three interchangeable cylindrical brushes with parallel flexible pins, installed so as to simultaneously enclose and brush the outside, upper side and inside of several teeth, the aforesaid module being provided, in front, with a U opening to insert the brushes astride the teeth, wherein the three interchangeable cylindrical brushes (17, 20, 21) on the normal tooth brushing module, are short and of relatively large diameter, brushes (20, 21) being very close to each other so as to reach the space between the teeth, the lower part of the upper brush (17) protruding very distinctly from the bottom of a flared edge U width space (36) provided on the front part and on the rear part of the body of the said module at each end of the brushes, wider than the widest teeth and distinctly deeper than the top of the teeth, cooperating with a space (51, 52) in the extension of body (55) of the module so as to be easily astride the jaw in normal brushing position, without being hindered by the other teeth, notably in the front of the jaw, and wherein the front part (19) of the aforesaid module body acting as bearing for the three brushes (17, 20, 21) is made removeable by clipping to the parts (15) of the aforesaid body forming the rear bearing of the brushes, and wherein the aforesaid part (19) also forms a cover (37) enveloping the brushes (17, 20, 21) up to the proximity of the inner and outer gums, and wherein a second module, designed for brushing the spaces located at the base of the teeth, contains two truncated cone brushes (70) opposite each other, equipped with a means of separating them from each other in view of installation.

2. Brush as claimed in claim 1, wherein the means of rotating (55) the truncated cone brushes (53) in the second module contains a body (54), a drive shaft (55) plugging on one side onto the motor block, provided on the other side with a drive pulley (64) and rotating in the bearings of body (54), and wherein the two brushes (53) are provided with a shank force-fitted into hub (57) of drive pulleys (59, 60) rotated by a belt (61) inserted on pulleys (59, 60, 62) and wherein the movement is imparted to drive pulley (62) by a couple of taper gears (63, 64) one of which (64) is secured to the drive shaft (55) and the other to the drive pulley (62).

3. Brush as claimed in claim 1, wherein the removeable brushing module contains two interchangeable taper brushes (70), whose axes, in brushing position, are located in the extension of each other and with their tops opposite each other, at least one millimetre apart, and wherein each of the brushes is mounted on a swivelling arm (73, 74) in the plane of the axes of the brushes cooperating with a means of manual separating controls enabling them to insert on the base of the separated teeth.

4. Brush as claimed in claim 1 wherein the means of rotating the tapered brushes in the third module contain a drive shaft (81) plugged in on one side to the shaft end of the motor block and provided on the other with a drive pully (80) secured to the shaft and cooperating with the belt (79) to rotate the driven pulleys (71, 72) mounted on levers (73, 74), pivoting between stops on a pin (75) secured to body (78) of the module and with intermediate pulleys (82, 83, 84, 85) mounted on either side of the driven pulley (80) on a pin (86) secured to body (78).

5. Brush as claimed in claims 1 and 2, wherein the means of separating the brushes (70) in the third module consists of a fixed belt (89) containing at each end a rod (90) inserting into a housing corresponding to each of the levers (73, 74) and bearing on two rollers (93, 94) and wherein a lever (87) hinged to a pin (88) on body (78) of the module is secured to the belt via its free end, and wherein levers (73, 74) carrying the brushes are returned to position by an elastic deformation return system.

### Patentansprüche

1. Elektrische Drehzahnbürste mit einem Motorblock und Drehbewegungsübertragungselementen mit Mitnahmewellen für die Bürsten verschiedene abnehmbarer Module, die die Bürsten und deren parallel oder senkrecht zu der aus dem Elektromotor ragenden Welle angebrachten Übertragungswellen tragen, ausserdem besitzt sie Bürstenschutzelemente. Innerhalb dieser elektrischen Zahnbürste besteht der abnehmbare Modul für das Normalbürsten der Zähne aus drei zylindrischen auswechselbaren Bürsten mit flexiblen Parallelachsen, die so angebracht sind, dass Zahnvorderseite, -oberseite und -innenseite mehrerer Zähne gleichzeitig eingeklemmt und geputzt werden können. Dieser Modul ist dabei an seiner Vorderseite mit einer U-höffnung ausgestattet, die es ermöglicht, die Bürste in Bockstellung über die Zähne zu setzen.

Diese Bürste wird dadurch gekennzeichnet, dass die drei austauschbaren zylindrischen Bürsten (17, 20, 21) des Normalburstmoduls kurz und von relativ breitem Durchmesser sind, die Bürsten 20, 21 liegen dabei sehr eng beieinander, um auch die Bereiche zwischen den Zähnen erreichen zu können. Der Innenteil der oberen Bürste 17 ragt deutlich vom Boden einer Auslösung in breiter U-Form 36 mit ausgeweiteten Rändern hervor, die bei der Vorder- und der Hinterseite des angegebenen Moduls an jedem Bürstenende ausgespart wurde. Dabei sind die Bürsten breiter als die breitesten Zähne und reichen bei weitem tiefer als nur bis zu den Zahnspitzen. Die Auflage des Moduls wird durch einen breiten lichten Abstand 51, 52 der Verlängerung des Gerätgehäuses 5 sehr stark erleichtert, ohne dass in Normalstellung des Kiefers beim Bürsten die anderen Zähne -insbesondere die vorderen Schneidezähne gestört oder beeinträchtigt werden. Sie kennzeichnet sich dadurch, dass der Vorderteil es Moduls 19, der auch als Bürstenlager der drei Bürsten 17, 20, 21 dient, durch eine Klemmung von dem Geräteteil 15 abgenommen werden kann, der das Hinterlager der Bürsten bildet.

Dadurch dass dieser Teil 19 gleichzeitig als Haube dient 37, durch die die Bürsten 17, 20, 21 bis in unmittelbarer Nähe des inneren und äusseren Zahnfleischs umhüllt werden. Sowie dadurch, dass ein zweiter Modul, der für das Bürsten der Bereiche an der Zahnbasis gedacht ist, aus zwei kegelstumpfartigen Bürsten 70 besteht, die sich gegenüberliegen, und der so ausgerüstet ist, dass die Bürsten auseinander gedrückt werden können, damit sie auf die Zähne angesetzt werden können.

2. Zahnbürste, nach Patentanspruch 1, die dadurch gekennzeichnet wird, dass das Drehantriebselement 55 der kegelstumpfförmigen Bürsten 53 des zweiten Moduls aus einem Gehäuse 54, einer Übertragungswelle 55 besteht, die auf einer Seite des Motorblocks eingesteckt ist und auf der anderen Seite eine Führungsrolle besitzt 64 und die sich in den Lagern des Gehäuses 54 dreht. Dass die beiden Bürsten 53 mit einem Endstück ausgestattet sind, das in die Naben 67 der mitgenommenen Rollen 59, 60 gepresst wurde, die durch einen Riemen 61, der auf der Rollen 59, 60, 62 aufliegt, in einer Drehbewegung mitgenommen werden. Dadurch dass die Führungsrolle 62 durch einkegelförmiges Zahnradpaar 63, 64 angetrieben wird, von dem ein Zahnrad 64 mit der Übertragungswelle 55 starr verbunden während das andere mit der Führungsrolle 62 verbunden ist.

3. Zahnbürste entsprechend des Patentanspruches 1, bei der der abnehmbare Bürstmodul dadurch gekennzeichnet wird, dass er zwei auswechselbare kegelförmige Bürstelemente 70 besitzt, deren Achsen in der Bürstlage jeweils in der Verlängerung der entsprechenden gegenüberliegenden Bürstenachse liegen und sich mit ihren Spitzen fast berühren (Abstand weniger als 1 Millimeter). Dadurch dass jede der Bürsten auf einem schwenkbaren Arm 73, 74 auf der Ebene der Bürstenachsen so angebracht ist, dass sie mit Hilfe eines manuell bedienbaren Aufklappelementes auf der unteren Zahnbasis von auseinanderstehender Zähne angesetzt werden können.

4. Zahnbürste entsprechend des Patentanspruches 1, die dadurch gekennzeichnet ist, dass das Antriebselement für die Drehbewegung der kegelförmigen Bürsten des dritten Bürstmoduls aus einer Antriebswelle 81 besteht, die an einem Ende auf des herausragende Stück der Motorblockwelle aufgesetzt wird und am anderen Ende eine Führungsrolle 80 besitzt, die mit der Welle starr verbunden ist und mit einem Riemen 79 zusammenarbeitet, um die mitgenommenen Rollen 71, 72, die auf den Hebeln 73, 74 aufmontiert sind, in eine Drehbewegung zu bringen. Die Hebel 73, 74 schwenken zwischen Anschlagstücken auf einer Achse hin und her 75, die mit dem Gehäuse 78 starr verbunden ist. Die Antriebswelle 81 arbeitet auch mit Umlenkrollen zusammen 82, 83, 84, 85 die an jeder Seite der Führundsrolle 80 auf einer mit dem Gehäuse 78 starr verbundenen Achse 86 angebracht sind.

5. Zahnbürste entsprechend den Patentansprüchen 1 und 2 die sich dadurch kennzeichnet, dass das Element zum Auseinanderbewegen der Bürsten 70 des dritten Bürstmoduls aus einem festen Riemen 89 besteht, an dessen beiden Enden sich ein Schaft 90 befindet, der in den entsprechenden Aussparungen der Hebel 73, 74 eingesetzt ist und der auf zwei Walzen 93, 94 aufliegt. Sowie dadurch, dass ein achsbeweglicher 88 Gelegenkhebel 87, der sich auf dem Gehäuse 78 des Moduls befindet, mit dem Riemen an seinem äussersten freien Ende verbunden ist, und dadurch dass die Hebel 73, 74, die die Bürsten tragen, durch ein elastiches Rückzugselement wieder in die Ausgangsposition zurückgeführt werden.

FIG.1
FIG.2
FIG.3
FIG.4
FIG.4A
FIG.5
FIG.6
FIG.7
FIG.8

0 108 097

FIG. 9

FIG. 11

FIG. 10

FIG. 12

2